# EUROPEAN PATENT SPECIFICATION

(11) **EP 3 111 776 B1**
(45) Date of publication and mention of the grant of the patent: **03.10.2018**
(21) Application number: 16177666.1
(22) Date of filing: 01.07.2016
(51) Int. Cl.: A23L 2/46, A23C 3/00, A61L 2/00

(54) **CONTROL METHOD OF A PASTEURIZING MACHINE AND PASTEURIZING MACHINE IMPLEMENTING SUCH METHOD**
VERFAHREN ZUR STEUERUNG EINER PASTEURISIERANLAGE UND ZU AUSFÜHRUNG DIESES VERFAHREN GEEINGNETE VORRICHTUNG.
PROCÉDÉ DE PILOTAGE D'UN APPAREIL DE PASTEURISATION ET APPAREIL DE PASTEURISATION ADAPTÉ À CE PROCÉDÉ.

(30) Priority: 02.07.2015 IT UB20151877
(43) Date of publication of application: 04.01.2017
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Bellemo, Matteo

(56) References cited:
- EP-A1- 0 565 202
- FR-A3- 2 938 730
- J F Mauck ET AL: "THE DAIRY PRACTICES COUNCIL GUIDELINES FOR CLEANING AND SANITIZING IN FLUID MILK PROCESSING PLANTS Reviewed and Reprinted with No Changes Necessary April 2001 First Edition -February 1979 First Revision -June 1984 Second Revision -January 1993 Prepared by CLEANING AND SANITIZING TASK FORCE PLANT E", , 1 April 2001 (2001-04-01), XP055251057, Retrieved from the Internet: URL:http://phpa.dhmh.maryland.gov/OEHFP/OF PCHS/Milk/Shared Documents/DPC029_Cleaning_Sanitizing_Fluid _Milk_Plants.pdf [retrieved on 2016-02-17]

## Description

The present invention relates to a control method of a pasteurizing machine and to a pasteurizing machine implementing such method.

Such a machine is for example disclosed in FR 2 938 730.

More specifically, the present invention relates to a control method of a pasteurizing machine specifically structured to pasteurize milk intended for the production of ice cream, custard or creams. The present invention moreover relates to a pasteurizing machine for the production of ice cream, custard creams.

Use to which the following description will make explicit reference without thereby losing generality.

As is known, most pasteurizing machines that are used for the production of artisan ice cream, custard creams are provided with a large vertical-axis processing tank, into which the milk to be pasteurized is poured; with a manually openable and closable discharge which protrudes from the front face of the machine and directly communicates with the bottom of the processing tank so as to allow the quick emptying of the tank at the end of the pasteurization process; with internal heating means which are capable of bringing and maintaining the processing tank and everything contained therein to/at a temperature ranging between +50°C and +100°C; and with internal cooling means which are capable of bringing and maintaining the processing tank and everything contained therein to/at a temperature ranging between +0°C and +10°C.

Furthermore, the aforementioned pasteurizing machines are also equipped with a rotatable agitator member which is located in the centre of the processing tank, locally coaxial to the vertical axis of the tank, and is able to rotate about its longitudinal axis to mix the milk contained in the tank; and with an electric motor that, during the milk pasteurization process, is capable of driving into rotation the rotatable agitator member inside the tank.

Since the processing tank is to be washed and sanitised daily, the most sophisticated pasteurizing machines also incorporate a water feeding line, which is manually controlled by the user and enables clean water to be poured directly into the processing tank to simplify the operations of washing and sanitising the tank.

Unfortunately, washing and sanitising of processing tank are particularly time-consuming operations, which must be done manually by the user and therefore have a significant impact on the machine operating costs.

Aim of the present invention is therefore to automate the washing operations of the pasteurizing machine.

In compliance with these aims, according to the present invention there is provided a control method of a pasteurizing machine as defined in claim 1 and preferably, though not necessarily, in any one of the claims dependent thereon.

According to the present invention there is also provided a pasteurizing machine for the production of ice cream, custard creams, as defined in claim 12 and preferably, though not necessarily, in any one of the claims dependent thereon.

The present invention will now be described with reference to the accompanying drawings, which illustrate a non-limiting embodiment thereof, in which:
- Figure 1 is a side view, with parts in section and parts removed for clarity, of a pasteurizing machine for production of ice cream, custard creams realized according to the teachings of the present invention; whereas
- Figure 2 shows, on an enlarged scale, the upper part of the Figure 1 pasteurizing machine in a different operating configuration.

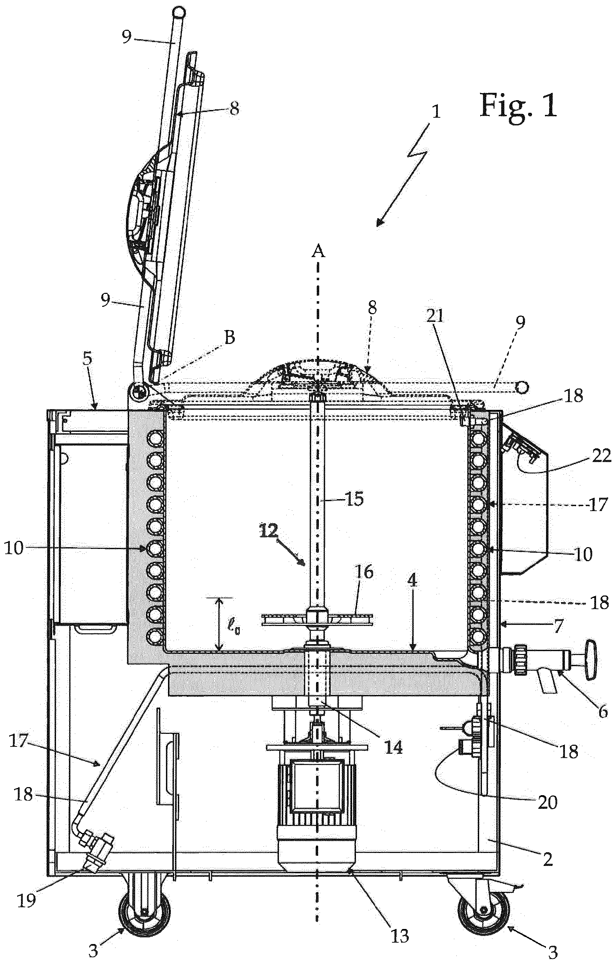

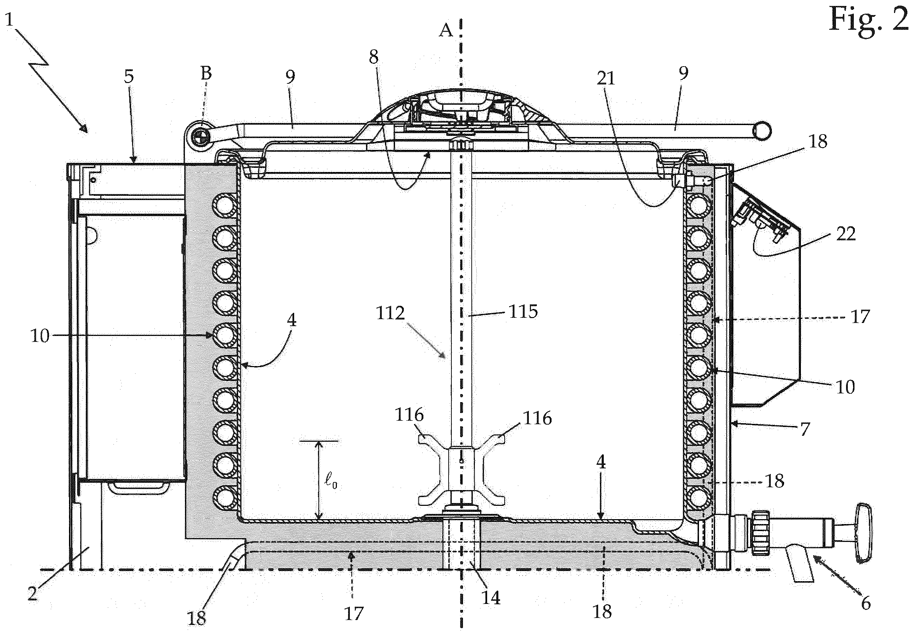

With reference to Figures 1 and 2, reference number 1 denotes as a whole a pasteurizing machine particularly adapted to pasteurize milk intended for the production of ice cream, custard creams.

In more detail, pasteurizing machine 1 basically comprises: a boxlike outer casing 2 preferably substantially parallelepiped in shape, and preferably, though not necessarily, provided with ground-resting wheels 3; a large processing tank 4, which is designed to receive the milk to be pasteurized and extends inside the boxlike casing 2, from the upper wall 5 of the casing, locally substantially coaxial to a longitudinal reference axis A substantially vertical and preferably also locally substantially perpendicular to the upper wall 5 of boxlike casing 2; a manually openable and closable discharge tap 6 which preferably juts out cantilevered from front wall 7 of boxlike casing 2 and directly communicates with the bottom of the processing tank 4, so as to allow the contents of the processing tank 4 to be selectively discharged outside the pasteurizing machine 1; and optionally also a removable lid 8 which is placed to close the upper mouth of processing tank 4.

In the example shown, in particular, processing tank 4 is preferably, though not necessarily, substantially rectangular in shape, and preferably has a nominal capacity ranging between 20 and 180 litres.

Preferably discharge tap 6 in turn is provided with a manually-operated valve of the piston type, which is capable of regulating the flowrate of the liquid flowing out of the processing tank 4.

With reference to Figures 1 and 2, instead, lid 8 preferably consists of a cup-like body which is shaped substantially complementary to the upper mouth of processing tank 4 and is arranged upside down, resting on the upper wall 5 of boxlike casing 2, above the upper mouth of tank 4, so as to be able to cover/close said mouth.

Preferably lid 8 is moreover fixed to a movable support arm 9 which, in turn, is butt hinged to the upper wall 5 of boxlike casing 2, beside the upper mouth of tank 4, so as to be able to rotate about a transversal and horizontal reference axis B, between a lowered position (Figures 1 and 2) in which support arm 9 is arranged substantially parallel to and glazing the upper wall 5, astride the mouth of tank 4, so as to arrange the cup-shaped body 8 at closure of the mouth of tank 4; and a raised position (Figure 1) in which support arm 9 is arranged substantially perpendicular to the upper wall 5, so that the cup-shaped body 8 is moved away from the upper mouth of tank 4.

With reference to Figure 1, within boxlike casing 2, pasteurizing machine 1 moreover comprises: an electrically-operated heater assembly which is located outside of processing tank 4 and is structured so as to be able to heat the tank 4 and everything contained therein; and an electrically-operated cooler assembly which is located outside of processing tank 4 and is structured so as to be able to cool down the tank 4 and everything contained therein.

In more detail, the heater assembly is preferably capable of bringing and maintaining tank 4 and everything contained therein to/at a temperature higher than +25°C and preferably ranging between +50°C and +100°C.

The cooler assembly, on the other hand, is preferably capable of bringing and maintaining tank 4 and everything contained therein to/at a temperature lower than +10°C and preferably ranging between +2°C and +8°C.

In the example shown, in particular, the side wall of processing tank 4 is preferably externally wrapped by a substantially spiral-shaped portion of a pipe 10, which is connected in closed circuit to an electrically-operated circulation pump (not shown) capable of circulating inside the pipe 10 a high thermal-conductivity liquid, such as for example glycol.

In more detail, the pipe 10 is preferably made of a metal material and is arranged in abutment on surface of processing tank 4, so as to transfer heat by conduction to the processing tank 4 and to its contents.

The heater assembly and the cooler assembly are preferably structured so as to be able to, respectively, heat and cool the high thermal-conductivity liquid that flows inside the pipe 10.

In more detail, in the example shown, the cooler assembly preferably comprises an electrically-operated heat pump device (not shown) which has the evaporator preferably located along the pipe 10, so as to extract heat from the high thermal-conductivity liquid.

The heat pump device won't be further described, because it is already widely used in the field of batch freezer and pasteurizing machines for the production of ice cream.

The heater assembly, instead, preferably comprises: a resistor which is located along the pipe 10, so as to transfer by conduction the produced heat directly to the high thermal-conductivity liquid; and a preferably electronically operated, power supply unit (not shown) which is capable of circulating electric current inside the resistor, so as to be able to heat the high thermal-conductivity liquid preferably, though not necessarily, to a temperature ranging between +70°C and +120°C.

With reference to Figures 1 and 2, pasteurizing machine 1 additionally comprises also: a rotatable agitator member 12, which is pivoted in an axially rotatable manner to the bottom of processing tank 4 and is structured so that, when driven into rotation, it shakes/mixes the milk contained in processing tank 4; and an electrically-operated motor assembly 13 which is capable of driving into rotation the rotatable agitator member 12 about the longitudinal/vertical axis A of the tank 4.

In more detail, the rotatable agitator member 12 is pivoted in axially rotatable manner to the bottom of the processing tank 4, preferably substantially in the centre of tank 4, and it extends into processing tank 4 while remaining locally coaxial to the longitudinal/vertical axis A of the tank. Preferably the rotatable agitator member 12 is also pivoted to the bottom of processing tank 4 in a manually removable manner.

The electrically-operated motor assembly 13, on the other hand, is located inside the boxlike casing 2, below the tank 4, and is capable of driving into rotation the agitator member 12 about its longitudinal axis, i.e. about the longitudinal/vertical axis A of the tank 4.

In the example shown, in particular, the motor assembly 13 is preferably fixed cantilevered to the bottom of processing tank 4, and is preferably provided with a rotating support shaft 14 that engages in pass-through and axially rotating manner the bottom wall of processing tank 4, and extends upwards into the processing tank 4 in cantilever manner while remaining locally coaxial to the longitudinal/vertical axis A of the tank.

Preferably, the rotatable agitator member 12 in turn comprises: a central hub 15 which is fitted in an angularly rigid manner, and preferably also in manually removable/ extractable manner, to the distal end of the support shaft 14, so as to be able to rotate about its longitudinal axis while remaining locally coaxial to the longitudinal/ vertical axis A of the tank; and a disk-shaped impeller 16 which is rigidly keyed to the central hub 15, close to the lower end of the latter, so as to be located at short distance from the bottom of processing tank 4, locally substantially coaxial to the longitudinal/vertical axis A of the tank and preferably also locally substantially parallel to the bottom of processing tank 4.

With reference to Figures 1 and 2, preferably the pasteurizing machine 1 moreover comprises a water feeding line 17, which extends at least partially inside the boxlike casing 2, and is structured so as to be able to channel water directly into the processing tank 4.

In other words, the water feeding line 17 is connectable to an external source of drinkable water or the like (such as for example any water tap connected to the water mains), and is structured so as to be able to selectively channel a flow of clean water directly into the processing tank 4.

In more detail, the water feeding line 17 comprises: a delivery pipe 18 which is connectable to an external source of preferably drinkable water (such as for example any water tap connected to the water mains), and extends into the boxlike casing 2 up to the processing tank 4, preferably close to the upper mouth of tank 4; a electric valve 19 which is located along the delivery pipe 18, preferably immediately downstream of the point of connection to the external water source, and is capable of regulate/control the flow of water directed toward the processing tank 4; and a flow meter 20 which is located along the delivery pipe 18, preferably downstream of electric valve 19, and is capable of determining in real time the flowrate of the water flow directed toward the processing tank 4.

Preferably the water feeding line 17 additionally also comprises an end nozzle 21 which is located at the end of delivery pipe 18, obviously within processing tank 4 and preferably close to the upper mouth of tank 4, and is structured so as to direct the water coming out from the pipe 18 towards the bottom of the processing tank 4.

With reference to Figures 1 and 2, the pasteurizing machine 1 is lastly provided with an electronic control unit 22 capable of controlling the heater assembly, the cooler assembly, and the motor assembly 13, in order to automatically perform the pasteurization process of the milk contained in processing tank 4.

In more detail, the pasteurizing machine 1 is preferably provided with at least one temperature sensor (not shown) capable of detecting the temperature of the processing tank 4 and of everything contained therein, and with at least one presence sensor (not shown) capable of detecting when the lid 8 is in place to close the mouth of processing tank 4; and the electronic control unit 22 is capable of controlling the heater assembly, the cooler assembly, and the motor assembly 13, according to the signals coming from the abovementioned sensors.

In addition, the electronic control unit 22 moreover communicates with the flow meter 20, and is capable of driving the electric valve 19 to directly control the inflow of water towards the processing tank 4, and also to automatically carry out the washing of tank 4.

With particular reference to Figure 2, pasteurizing machine 1 is preferably, though not necessarily, also provided with a second rotatable member 112 which can be pivoted to the bottom of processing tank 4 in place of the rotatable agitator member 12.

In more detail, the second rotatable member 112 is structured for being fitted to the support shaft 14 so as to rotate together with shaft 14 about the longitudinal/ vertical axis A of tank 4, and is structured so as to be able to splash, when rotates at high speed about the longitudinal/vertical axis A, the water contained in the processing tank 4 onto the side walls of the processing tank 4, preferably for substantially the entire height of processing tank 4.

In other words, while rotating about the longitudinal/ vertical axis A, the rotatable member 112 is able to splash a large amount of water onto the side walls of processing tank 4, up to the level of the lid 8.

In the example shown, in particular, the second rotatable member 112 is preferably provided with at least one and, more conveniently, with a plurality of platelike radial blades 116, which protrude in cantilever manner from the central hub 115 and are preferably oriented so as to be locally substantially coplanar to the longitudinal/vertical axis A of the tank 4.

With reference to Figure 2, in the example shown, in particular, the rotatable member 112 preferably comprises: a central hub 115 structured to be fitted in angularly rigid manner, and also in a manually removable/extractable manner, to the distal end of support shaft 14, so as to rotate together with the shaft 14 about the longitudinal/ vertical axis A of tank 4; and a pair of platelike radial blades 116 which protrude cantilevered from the central hub 115, in a diametrical position from opposite sides of the hub, and are oriented so as to be locally substantially coplanar to each other and to the longitudinal axis of the central hub 115, i.e. substantially coplanar to the longitudinal/vertical axis A of processing tank 4.

Preferably, the two platelike radial blades 116 are additionally shaped so as to form, on the central hub 115, a platelike rigid structure substantially X-shaped.

General operation of pasteurizing machine 1 is similar to that of the pasteurizing machines currently on the market and therefore requires no further explanation, except to point out that the electronic control unit 22, during the milk pasteurization process, controls the motor assembly 13 so as to drive the agitator member 12 into rotation about the longitudinal/vertical axis A of the tank 4 up to a maximum angular speed greater than 1000 revolutions per minute, and optionally even greater than 1800 revolutions per minute.

In more detail, in the example shown the electronic control unit 22, during the milk pasteurization process, is able to control the motor assembly 13 so as to drive the agitator member 12 into rotation up to a maximum angular speed preferably, though not necessarily, ranging between 2000 and 3000 revolutions per minute.

Unlike the currently known pasteurizing machines, the electronic control unit 22 is also capable of implementing at least one washing program of processing tank 4, which includes at least one washing cycle comprising, in sequence, the steps
- of pouring into processing tank 4 a predetermined amount of water which is preferably lower than 50% of the nominal capacity of processing tank 4; and
- of actuating, for a predetermined washing time that preferably ranges between 1 and 10 minutes, the motor assembly 13 so as to drive into rotation the rotatable member 12 or 112 currently located inside processing tank 4, about the longitudinal/ vertical axis A of the tank at a predetermined first angular speed which value is preferably greater than 75% of the maximum angular speed reached during the milk pasteurization process, so as to splash water onto the side walls of processing tank 4.

In more detail, the electronic control unit 22 is capable of controlling the water feeding line 17, or rather the electric valve 19, so as to pour into processing tank 4 a predetermined amount of water which is preferably less than 50% of the nominal capacity of processing tank 4.

Preferably, the washing cycle additionally provides that, before rotating the rotatable member 12 or 112 inside the processing tank 4 at high speed to splash water onto the side walls of the processing tank 4, the electronic control unit 22 actuates the heater assembly so as to bring the water contained in processing tank 4 to a predetermined washing temperature which is preferably equal to or higher than +25°C, and optionally even equal to or higher than +50°C.

In addition, the washing cycle preferably also provides that, during the heating of the water contained in processing tank 4, the electronic control unit 22 controls the motor assembly 13 so as to drive into rotation the rotatable member 12 or 112 currently located inside processing tank 4, about the longitudinal/vertical axis A of the tank, at a predetermined second angular speed which value is preferably less than 50% of the maximum angular speed reached during the milk pasteurization process.

The second angular speed is therefore lower than the first angular speed.

In the example shown, in particular, the electronic control unit 22 is capable of controlling the water feeding line 17 so as to introduce into processing tank 4 an amount of water preferably, though not necessarily, ranging between 20% and 40% of the nominal capacity of processing tank 4.

In addition, the electronic control unit 22 is capable of controlling the heater assembly so as to bring the water contained in processing tank 4 to a washing temperature preferably, though not necessarily, ranging between +50°C and +75°C.

In addition, the electronic control unit 22 is capable of controlling the motor assembly 13 so as to drive into rotation the rotatable member located inside the processing tank 4 about the longitudinal/vertical axis A of the tank to a first angular speed which value is preferably higher than or equal to the maximum angular speed reached during the milk pasteurization process, i.e. preferably higher than or equal to 1000 revolutions per minute.

In more detail, in the example shown the first angular speed has a value preferably ranging between 2000 and 3000 revolutions per minute.

Lastly, during the heating of the water contained in processing tank 4, the electronic control unit 22 is also capable of controlling the motor assembly 13 so as to drive into rotation the rotatable member located inside the processing tank 4, about the longitudinal/vertical axis A of the tank, at a second angular speed which value preferably ranges between 20% and 30% of the maximum angular speed reached during the milk pasteurization process, and/or preferably lower than 500 revolutions per minute.

In more detail, when washing of processing tank 4 is to be performed, the user temporarily opens the discharge tap 6 so as to empty processing tank 4, and then selects the desired washing program of tank 4 on the machine control panel.

Preferably, before starting the washing program of processing tank 4, the user also replaces the rotatable agitator member 12 with the rotatable member 112 so as to maximize the amount of water that will be subsequently splashed onto the side walls of the processing tank 4.

Following the selection and activation of the washing program of processing tank 4, the electronic control unit 22 preferably first verifies whether the lid 8 is arranged to close the upper mouth of the processing tank 4, and then actuates the opening of electric valve 19 so as to introduce into processing tank 4 the amount of water required by the selected washing program.

Preferably the amount of water introduced into processing tank 4 is also such as to at least partially submerge the platelike radial blades 116 of rotatable member 112, or the disk-shaped impeller 16 of the rotatable agitator member 12.

In more detail, the electronic control unit 22 opens the electric valve 19 and then monitors, via the flow meter 20, the amount of water that is progressively introduced into processing tank 4.

When the water introduced into processing tank 4 reaches the predetermined level l₀, the electronic control unit 22 closes the electric valve 19 and then activates the heater assembly so as to bring and maintain the water contained in processing tank 4 to/at the washing temperature which is required by the selected washing program and which preferably ranges between +50°C and +75°C.

Preferably, more or less simultaneously with the activation of the heater assembly, the electronic control unit 22 additionally controls the motor assembly 13 so as to slowly rotate the rotatable member 112, or possibly the rotatable agitator member 12, about the longitudinal/ vertical axis A, at an angular speed which value is preferably lower than 50% of the maximum angular speed reached during the pasteurization process, and moreover is preferably, though not necessarily, lower than 500 revolutions per minute.

When the water inside tank 4 reaches the predetermined washing temperature, the electronic control unit 22 actuates the motor assembly 13 so as to rotate, for a predetermined washing time preferably ranging between 1 and 10 minutes, the rotatable member 112, or possibly the rotatable agitator member 12, about the longitudinal/ vertical axis A, at an angular speed preferably higher than 75% of the maximum angular speed reached during the milk pasteurization process, and preferably even higher than or equal to the maximum angular speed reached during the pasteurization process.

In more detail, in the example shown the electronic control unit 22 actuates the motor assembly 13 so as to rotate, during the washing time, the rotatable member 112, or possibly the rotatable agitator member 12, about the longitudinal/vertical axis A, at an angular speed preferably ranging between 2000 and 3000 revolutions per minute.

While rotating about the longitudinal/vertical axis A at the second angular speed, the rotatable member 112, or possibly the rotatable agitator member 12, splashes onto the side walls of the processing tank 4 a large amount of hot water, which succeeds in removing the dirt from the side walls of tank 4 and from the lid 8.

As an option, the electronic control unit 22 may also reiterate several times the washing step wherein actuates the motor assembly 13 so as to rotate the rotatable member 112, or possibly the rotatable agitator member 12, inside the washing tank 4 at an angular speed greater than 75% of the maximum angular speed reached during the pasteurization process, and preferably even greater than or equal to the maximum angular speed reached during the pasteurization process.

The washing cycle ends when the electronic control unit 22 stops the rotatable member 112, or possibly the rotatable agitator member 12, at the end of the (last) washing step.

Preferably, after stopping the rotatable member 12 or 112, the electronic control unit 22 may also signal, via acoustic and/or visual signals, that the washing program or the washing cycle is completed, and that the discharge tap 6 needs to be opened to empty the processing tank 4.

Obviously, the electronic control unit 22 can also perform, in rapid succession, a plurality of washing cycles which end with the emptying of the washing tank 4 via the discharge tap 6.

In other words, the electronic control unit 22 can perform a washing program that envisages several washing cycles, and wherein each washing cycle envisages that the electronic control unit 22
- controls the water feeding line 17 so as to pour the predetermined amount of water into the processing tank 4;
- actuates the heater assembly to heat the water contained in the tank 4 to the predetermined washing temperature; and lastly
- actuates, at least once and for a predetermined washing time, the motor assembly 13 so as to rotate the rotatable member 12 or 112 about the longitudinal/vertical axis A of the tank at an angular speed higher than 75% of the maximum angular speed reached during the pasteurization process.

The advantages deriving from automation of the washing of processing tank 4 are large in number.

Firstly, the pasteurizing machine 1 only requires the presence on site of the user when the discharge tap 6 is to be opened to empty the processing tank 4 at the end of the (of each) washing cycle, with the advantages that this entails.

In fact, workers can perform other tasks while the pasteurizing machine 1 carries out the washing of processing tank 4.

In addition, the pasteurizing machine 1 consumes significantly less drinkable water than the pasteurizing machines currently on the market, because the electronic control unit 22 is able to minimize the consumption of drinking water.

Lastly, it is clear that modifications and variations may be made to the pasteurizing machine 1 and the control method thereof without departing from the scope of the present invention.

For example, in a less sophisticated embodiment, the pasteurizing machine 1 may be devoid of the flow meter 20, and the electronic control unit 22 can be configured so as to keep the electric valve 19 open for a predetermined time interval which vale depends on the amount of water to be introduced into the processing tank 4.

In fact, the amount of water introduced into the tank 4 is estimated on the basis of the actual opening time of the electric valve 19, and of the maximum flow rate of the electric valve 19.

## Claims

1. A control method of a pasteurizing machine (1), which comprises: a substantially vertical processing tank (4); heating means (10) capable of heating the processing tank (4) and everything contained therein; a rotatable member (12, 112) pivoted in axially rotational manner to the bottom of the processing tank (4) substantially coaxial to the tank longitudinal axis (A); and a motor assembly (13) capable of driving into rotation the rotatable member (12, 112) inside the processing tank (4);
the control method **being characterized by** comprising, in sequence, the steps of pouring a predetermined amount of water into the processing tank (4); and of actuating, for a predetermined washing time, the motor assembly (13) so as to drive into rotation the rotatable member (12, 112) about the tank longitudinal axis (A) at a predetermined first angular speed, so as to splash water onto the side walls of said processing tank (4).

2. Control method of a pasteurizing machine according to claim 1, **characterized in that** the amount of water poured into the processing tank (4) is less than 50% of the nominal capacity of the processing tank (4); and/or that the washing time ranges from 1 to 10 minutes; and/or that the first angular speed is higher than 75% of the maximum angular speed reached during the milk pasteurizing process.

3. Control method of a pasteurizing machine according to claim 1 or 2, **characterized in that** the step of pouring water into the processing tank (4) comprises the step of actuating a water feeding line (17) present in the pasteurizing machine (1), so as to pour said predetermined amount of water into the processing tank (4).

4. Control method of a pasteurizing machine according to any one of the preceding claims, **characterized by** additionally comprising the step of actuating the heating means (10) to bring the water contained in the processing tank (4) to a predetermined washing temperature.

5. Control method of a pasteurizing machine according to claim 4, **characterized in that** said washing temperature is equal to or higher than +25°C.

6. Control method of a pasteurizing machine according to claim 4 or 5, **characterized by** additionally comprising the step of actuating, during the heating of the water contained in the processing tank (4), the motor assembly (13) so as to drive into rotation said rotatable member (12, 112) about the tank longitudinal axis (A) at a second angular speed lower than said first angular speed.

7. Control method of a pasteurizing machine according to claim 6, **characterized in that** the value of said second angular speed is lower than 50% of the maximum angular speed reached during the milk pasteurizing process.

8. Control method of a pasteurizing machine according to claim 6 or 7, **characterized in that** said second angular speed is lower than 500 revolutions per minute.

9. Control method of a pasteurizing machine according to any one of the claims from 2 to 8, **characterized in that** the amount of water introduced into the processing tank (4) ranges from 20% to 40% of the nominal capacity of the processing tank (4).

10. Control method of a pasteurizing machine according to any one of the preceding claims, **characterized in that** the value of said first angular speed is higher than 1000 revolutions per minute.

11. Control method of a pasteurizing machine according to any one of the preceding claims, **characterized in that** the maximum angular speed reached during the milk pasteurizing process is higher than 1000 revolutions per minute, and preferably ranges between 2000 and 3000 revolutions per minute.

12. A pasteurizing machine (1) comprising: a boxlike outer casing (2); a processing tank (4) which extends inside the boxlike casing (2) while remaining locally coaxial to a substantially vertical reference axis (A); heating means (10) capable of heating the processing tank (4) and everything contained therein; cooling means (10) capable of cooling the processing tank (4) and everything contained therein; a rotatable member (12, 112) pivoted in axially rotational manner to the bottom of the processing tank (4) substantially coaxial to the tank longitudinal axis (A); a motor assembly (13) capable of driving into rotation the rotatable member (12, 112) inside the processing tank (4); and an electronic control unit (22) able to drive the heating means (10), the cooling means (10) and the motor assembly (13);
the pasteurizing machine **being characterized in that** the electronic control unit (22) is configured to implement a control method according to any one of the claims from 1 to 11.

13. Pasteurizing machine according to claim 12, **characterized by** additionally comprising a water feeding line (17) structured to selectively channel a flow of water into said processing tank (4); and in that the electronic control unit (22) is also able to drive said water feeding line (17) to control the inflow of water towards the processing tank (4).

14. Pasteurizing machine according to claim 13, **characterized in that** the water feeding line (17) comprises: a delivery pipe (18) which is connectable to an external water source and extends within the boxlike casing (2) up to reach the processing tank (4), and an electric valve (19) which is located along said delivery pipe (18) and is capable of regulating the flow of water directed towards the processing tank (4); the electronic control unit (22) being able to drive said electric valve (19).

15. Pasteurizing machine according to claim 14, **characterized in that** the water feeding line (17) additionally comprises a flow meter (20) which is located along the delivery pipe (18), and is able to determine the flow rate of water directed to the processing tank (4); the electronic control unit (22) being in communication with said flow meter (20).

16. Pasteurizing machine according to claim 12, 13, 14 or 15, **characterized in that** said heating means (10) are capable of bringing and maintaining the processing tank (4) and everything contained therein to/at a temperature higher than +25°C; and/or that the cooling means (10) are capable of bringing and maintaining the processing tank (4) and everything contained therein to/at a temperature lower than +10°C.

## Patentansprüche

1. Steuerungs- bzw. Regelungsverfahren einer Pasteurisiermaschine (1), das umfasst: einen im Wesentlichen vertikalen Verarbeitungstank (4); Heizmittel (10), die in der Lage sind, den Verarbeitungstank (4) und alles, was darin enthalten ist, zu erwärmen; ein drehbares Glied (12, 112), das auf axial drehbare Weise zu dem Boden des Verarbeitungstanks (4) im Wesentlichen koaxial zu der Tanklängsachse (A) angelenkt ist; und eine Motoranordnung (13), die in der Lage ist, das drehbare Glied (12, 112) innerhalb des Verarbeitungstanks (4) in Drehung zu versetzen;
wobei das Steuerungs- bzw. Regelungsverfahren **dadurch gekennzeichnet ist, dass** es nacheinander die Schritte umfasst: Einfüllen einer vorbestimmten Menge Wasser in den Verarbeitungstank (4); und Betätigen der Motoranordnung (13) für eine vorbestimmte Waschzeit, um das drehbare Glied (12, 112) mit einer vorbestimmten ersten Winkelgeschwindigkeit um die Tanklängsachse (A) in Drehung zu versetzen, um Wasser auf die Seitenwände des Verarbeitungstanks (4) zu spritzen.

2. Steuerungs- bzw. Regelungsverfahren einer Pasteurisiermaschine nach Anspruch 1, **dadurch gekennzeichnet, dass** die in den Verarbeitungstank (4) eingefüllte Wassermenge weniger als 50% der Nennkapazität des Verarbeitungstanks (4) beträgt; und/oder dass die Waschzeit im Bereich von 1 bis 10 Minuten liegt; und/oder dass die erste Winkelgeschwindigkeit höher als 75% der maximalen Winkelgeschwindigkeit ist, die während des Milchpasteurisierungsprozesses erreicht wird.

3. Steuerungs- bzw. Regelungsverfahren einer Pasteurisiermaschine nach Anspruch 1 oder 2, **dadurch gekennzeichnet, dass** der Schritt des Einfüllens von Wasser in den Verarbeitungstank (4) den Schritt des Betätigens einer in der Pasteurisierungsmaschine (1) vorhandenen Wasserzulaufleitung (17) umfasst, um die vorbestimmte Wassermenge in den Verarbeitungstank (4) zu füllen.

4. Steuerungs- bzw. Regelungsverfahren einer Pasteurisiermaschine nach einem der vorhergehenden Ansprüche, **dadurch gekennzeichnet, dass** es zusätzlich den Schritt des Betätigens der Heizmittel (10) umfasst, um das in dem Verarbeitungstank (4) enthaltene Wasser auf eine vorbestimmte Waschtemperatur zu bringen.

5. Steuerungs- bzw. Regelungsverfahren einer Pasteurisiermaschine nach Anspruch 4, **dadurch gekennzeichnet, dass** die Waschtemperatur gleich oder höher als +25°C ist.

6. Steuerungs- bzw. Regelungsverfahren einer Pasteurisiermaschine nach Anspruch 4 oder 5, **dadurch gekennzeichnet, dass** es zusätzlich den Schritt des Betätigens, während des Erwärmens des in dem Verarbeitungstank (4) enthaltenen Wassers, der Motoranordnung (13) umfasst, um das drehbare Glied (12, 112) um die Tanklängsachse (A) mit einer zweiten Winkelgeschwindigkeit in Drehung zu versetzten, die niedriger als die erste Winkelgeschwindigkeit ist.

7. Steuerungs- bzw. Regelungsverfahren einer Pasteurisiermaschine nach Anspruch 6, **dadurch gekennzeichnet, dass** der Wert der zweiten Winkelgeschwindigkeit kleiner als 50% der maximalen Winkelgeschwindigkeit ist, die während des Milchpasteurisierungsprozesses erreicht wird.

8. Steuerungs- bzw. Regelungsverfahren einer Pasteurisiermaschine nach Anspruch 6 oder 7, **dadurch gekennzeichnet, dass** die zweite Winkelgeschwindigkeit geringer als 500 Umdrehungen pro Minute ist.

9. Steuerungsverfahren für eine Pasteurisierungsmaschine nach einem der Ansprüche 2 bis 8, **dadurch gekennzeichnet, dass** die in den Verarbeitungstank (4) eingebrachte Wassermenge zwischen 20% und 40% der Nennkapazität des Verarbeitungstanks liegt (4).

10. Steuerungs- bzw. Regelungsverfahren einer Pasteurisiermaschine nach einem der vorhergehenden Ansprüche, **dadurch gekennzeichnet, dass** der Wert der ersten Winkelgeschwindigkeit höher als 1000 Umdrehungen pro Minute ist.

11. Steuerungs- bzw. Regelungsverfahren einer Pasteurisiermaschine nach einem der vorhergehenden Ansprüche, **dadurch gekennzeichnet, dass** die maximale Winkelgeschwindigkeit, die während des Milchpasteurisierungsprozesses erreicht wird, höher als 1000 Umdrehungen pro Minute ist und vorzugsweise im Bereich zwischen 2000 und 3000 Umdrehungen pro Minute liegt.

12. Pasteurisiermaschine (1), umfassend: ein kastenartiges äußeres Gehäuse (2); einen Verarbeitungstank (4), der sich innerhalb des kastenartigen Gehäuses (2) erstreckt, während er lokal koaxial zu einer im Wesentlichen vertikalen Bezugsachse (A) bleibt; Heizmittel (10), die in der Lage sind, den Verarbeitungstank (4) und alles, was darin enthalten ist, zu erwärmen; Kühlmittel (10), die in der Lage sind, den Verarbeitungstank (4) und alles, was darin enthalten ist, zu kühlen; ein drehbares Glied (12, 112), das auf axial drehbare Weise zu dem Boden des Verarbeitungstanks (4) im Wesentlichen koaxial zu der Tanklängsachse (A) angelenkt ist; eine Motoranordnung (13), die in der Lage ist, das drehbare Glied (12, 112) innerhalb des Verarbeitungstanks (4) in Drehung zu versetzen; und eine elektronische Steuer- bzw. Regeleinheit (22), die in der Lage ist, die Heizmittel (10), die Kühlmittel (10) und die Motoranordnung (13) anzutreiben bzw. anzusteuern;
wobei die Pasteurisiermaschine **dadurch gekennzeichnet ist, dass** die elektronische Steuer- bzw. Regeleinheit (22) konfiguriert ist, ein Steuerungs- bzw. Regelungsverfahren nach einem der Ansprüche 1 bis 11 zu implementieren.

13. Pasteurisiermaschine nach Anspruch 12, **dadurch gekennzeichnet, dass** sie zusätzlich eine Wasserzulaufleitung (17) umfasst, die so strukturiert ist, dass sie selektiv einen Wasserfluss in den Verarbeitungstank (4) kanalisiert; und dadurch, dass die elektronische Steuer- bzw. Regeleinheit (22) auch in der Lage ist, die Wasserzulaufleitung (17) anzutreiben bzw. anzusteuern, um den Wasserzufluss zu dem Verarbeitungstank (4) zu steuern bzw. zu regeln.

14. Pasteurisiermaschine nach Anspruch 13, **dadurch gekennzeichnet, dass** die Wasserzulaufleitung (17) umfasst: ein Zufuhrrohr (18), das mit einer externen Wasserquelle verbindbar ist und sich innerhalb des kastenartigen Gehäuses (2) bis zu dem Verarbeitungstank erstreckt (4), und ein elektrisches Ventil (19), das sich entlang der Zufuhrleitung (18) befindet und in der Lage ist, den in Richtung auf den Verarbeitungstank (4) gerichteten Wasserstrom zu regulieren; wobei die elektronische Steuer- bzw. Regeleinheit (22) in der Lage ist, das elektrische Ventil (19) anzutreiben bzw. ansteuern.

15. Pasteurisiermaschine nach Anspruch 14, **dadurch gekennzeichnet, dass** die Wasserzulaufleitung (17) zusätzlich einen Durchflussmesser (20) umfasst, der sich entlang der Zufuhrleitung (18) befindet, und in der Lage ist, die Durchflussrate von Wasser zu bestimmen, das zu dem Verarbeitungstank (4) gerichtet wird; wobei die elektronische Steuer- bzw. Regeleinheit (22) mit dem Durchflussmesser (20) in Verbindung steht.

16. Pasteurisiermaschine nach Anspruch 12, 13, 14 oder 15, **dadurch gekennzeichnet, dass** die Heizmittel (10) in der Lage sind, den Verarbeitungstank (4) und alles, was darin enthalten ist, auf eine Temperatur von mehr als +25°C zu bringen und zu halten; und/oder dass die Kühlmittel (10) in der Lage sind, den Verarbeitungstank (4) und alles, was darin enthalten ist, auf eine Temperatur von weniger als +10°C zu bringen und zu halten.

## Revendications

1. Procédé de commande d'une machine de pasteurisation (1), qui comprend : un réservoir de traitement sensiblement vertical (4) ; des moyens de chauffage (10) capables de chauffer le réservoir de traitement (4) et la totalité contenue dans celui-ci ; un élément rotatif (12, 112) pivotant de manière axialement rotative vers le fond du réservoir de traitement (4) de façon sensiblement coaxiale à l'axe longitudinal de réservoir (A) ; et un ensemble moteur (13) capable d'entraîner en rotation l'élément rotatif (12, 112) à l'intérieur du réservoir de traitement (4) ;
le procédé de commande étant **caractérisé en ce qu'**il comprend, en séquence, les étapes du versement d'une quantité prédéterminée d'eau dans le réservoir de traitement (4) ; et de l'actionnement, pendant un temps de lavage prédéterminé, de l'ensemble moteur (13) afin d'entraîner en rotation l'élément rotatif (12, 112) autour de l'axe longitudinal de réservoir (A) à une première vitesse angulaire prédéterminée, afin d'éclabousser les parois latérales dudit réservoir de traitement (4) avec de l'eau.

2. Procédé de commande de machine de pasteurisation selon la revendication 1, **caractérisé en ce que** la quantité d'eau versée dans le réservoir de traitement (4) est inférieure à 50 % de la capacité nominale du réservoir de traitement (4) ; et/ou que le temps de lavage varie de 1 à 10 minutes ; et/ou que la première vitesse angulaire est supérieure à 75 % de la vitesse angulaire maximum atteinte durant le processus de pasteurisation de lait.

3. Procédé de commande de machine de pasteurisation selon la revendication 1 ou 2, **caractérisé en ce que** l'étape du versement d'eau dans le réservoir de traitement (4) comprend l'étape de l'actionnement d'une conduite d'alimentation en eau (17) présente dans la machine de pasteurisation (1), afin de verser ladite quantité prédéterminée d'eau dans le réservoir de traitement (4).

4. Procédé de commande de machine de pasteurisation selon l'une quelconque des revendications précédentes, **caractérisé en ce qu'**il comprend en outre l'étape de l'actionnement du moyen de chauffage (10) pour mettre l'eau contenue dans le réservoir de traitement (4) à une température de lavage prédéterminée.

5. Procédé de commande de machine de pasteurisation selon la revendication 4, **caractérisé en ce que** ladite température de lavage est égale ou supérieure à +25 °C.

6. Procédé de commande de machine de pasteurisation selon la revendication 4 ou 5, **caractérisé en ce qu'**il comprend en outre l'étape de l'actionnement, durant le chauffage de l'eau contenue dans le réservoir de traitement (4), de l'ensemble moteur (13) afin d'entraîner en rotation ledit élément rotatif (12, 112) autour de l'axe longitudinal de réservoir (A) à une seconde vitesse angulaire inférieure à ladite première vitesse angulaire.

7. Procédé de commande de machine de pasteurisation selon la revendication 6, **caractérisé en ce que** la valeur de ladite seconde vitesse angulaire est inférieure à 50 % de la vitesse angulaire maximum atteinte durant le processus de pasteurisation de lait.

8. Procédé de commande de machine de pasteurisation selon la revendication 6 ou 7, **caractérisé en ce que** ladite seconde vitesse angulaire est inférieure à 500 révolutions par minute.

9. Procédé de commande de machine de pasteurisation selon l'une quelconque des revendications 2 à 8, **caractérisé en ce que** la quantité d'eau introduite dans le réservoir de traitement (4) varie de 20 % à 40 % de la capacité nominale du réservoir de traitement (4).

10. Procédé de commande de machine de pasteurisation selon l'une quelconque des revendications précédentes, **caractérisé en ce que** la valeur de ladite première vitesse angulaire est supérieure à 1000 révolutions par minute.

11. Procédé de commande de machine de pasteurisation selon l'une quelconque des revendications précédentes, **caractérisé en ce que** la vitesse angulaire maximum atteinte durant le processus de pasteurisation de lait est supérieure à 1000 révolutions par minute, et de préférence varie entre 2000 et 3000 révolutions par minute.

12. Machine de pasteurisation (1), comprenant : un carter extérieur en forme de boîte (2) ; un réservoir de traitement (4) qui s'étend à l'intérieur du carter en forme de boîte (2) tout en restant localement coaxial à un axe de référence sensiblement vertical (A) ; des moyens de chauffage (10) capables de chauffer le réservoir de traitement (4) et la totalité contenue dans celui-ci ; des moyens de refroidissement (10) capables de refroidir le réservoir de traitement (4) et la totalité contenue dans celui-ci ; un élément rotatif (12, 112) pivotant de manière axialement rotative vers le fond du réservoir de traitement (4) de façon sensiblement coaxiale à l'axe longitudinal de réservoir (A) ; un ensemble moteur (13) capable d'entraîner en rotation l'élément rotatif (12, 112) à l'intérieur du réservoir de traitement (4) ; et une unité de commande électronique (22) capable d'entraîner le moyen de chauffage (10), le moyen de refroidissement (10) et l'ensemble moteur (13) ;
la machine de pasteurisation étant **caractérisée en ce que** l'unité de commande électronique (22) est configurée pour mettre en oeuvre un procédé de commande selon l'une quelconque des revendications 1 à 11.

13. Machine de pasteurisation selon la revendication 12, **caractérisée en ce qu'**elle comprend en outre une conduite d'alimentation en eau (17) structurée pour sélectivement canaliser un débit d'eau dans ledit réservoir de traitement (4) ; et **en ce que** l'unité de commande électronique (22) est également capable d'entraîner ladite conduite d'alimentation en eau (17) pour commander le débit d'entrée d'eau vers le réservoir de traitement (4).

14. Machine de pasteurisation selon la revendication 13, **caractérisée en ce que** la conduite d'alimentation en eau (17) comprend : un tuyau de distribution (18) qui est raccordable à une source d'eau externe et s'étend à l'intérieur du carter en forme de boîte (2) vers le haut pour atteindre le réservoir de traitement (4), et une vanne électrique (19) qui est située le long dudit tuyau de distribution (18) et est capable de réguler le débit de l'eau dirigée vers le réservoir de traitement (4) ; l'unité de commande électronique (22) étant capable d'entraîner ladite vanne électrique (19).

15. Machine de pasteurisation selon la revendication 14, **caractérisée en ce que** la conduite d'alimentation en eau (17) comprend en outre un débitmètre (20) qui est situé le long du tuyau de distribution (18), et est capable de déterminer le débit de l'eau dirigée vers le réservoir de traitement (4) ; l'unité de commande électronique (22) étant en communication avec ledit débitmètre (20).

16. Machine de pasteurisation selon la revendication 12, 13, 14 ou 15, **caractérisée en ce que** lesdits moyens de chauffage (10) sont capables de mettre et de maintenir le réservoir de traitement (4) et la totalité contenue dans celui-ci à une température supérieure à +25 °C ; et/ou que les moyens de refroidissement (10) sont capables de mettre et de maintenir le réservoir de traitement (4) et la totalité contenue dans celui-ci à une température inférieure à +10 °C.
